Europäisches Patentamt

European Patent Office

Office européen des brevets

(19)

(11) Publication number: **0 059 350**
**A1**

(12) **EUROPEAN PATENT APPLICATION**

(21) Application number: **82101014.7**

(22) Date of filing: **11.02.82**

(51) Int. Cl.³: **C 23 C 3/00**
**B 01 D 37/02, B 01 J 19/00**
**C 02 F 1/62**

(30) Priority: **23.02.81 US 236776**

(43) Date of publication of application:
**08.09.82 Bulletin 82/36**

(84) Designated Contracting States:
**DE FR GB IT**

(71) Applicant: **SHIPLEY COMPANY INC.**
**2300 Washington Street**
**Newton, Massachusetts 02162(US)**

(72) Inventor: **Ireland, Irving Robert**
**P.O. Box 613**
**Newton Lower Falls, Mass. 02162(US)**

(74) Representative: **Bunke, Holger, Dr. et al,**
**Patentanwälte Prinz, Bunke & Partner**
**Ernsbergerstrasse 19**
**D-8000 München 60(DE)**

(54) **Waste solution treatment module.**

(57) A process for the waste treatment of metal plating solutions, and a module for use therein. A pre-plumbed module filled with seeder and a pH adjustor solution for shipping is connected to the growth tank of a plating line and excess solution is introduced into the module where metal values are removed.

FIG.1

SOLUTION WASTE TREATMENT MODULE

Background of the Invention

1. Field of the Invention

This invention is directed to a process for the waste treatment of metal plating solutions utilizing a metal recovery module and a module for use therein.

2. Description of Prior Art

Solutions capable of plating metal are well known in the art. The most commonly used metal plating solutions comprise electrolytic and electroless solutions, the latter being capable of plating metal without the need for electricity.

The most frequently used electroless solutions for plating metal comprise copper and nickel plating solutions. Such solutions generally comprise four major ingredients dissolved in water. These ingredients include (1) a source of the metal plating ions, (2) one or more complexing agents capable of maintaining said metal ions in solution, (3) a reducing agent capable of reducing said metal ions to metallic form in the presence of a catalytic surface, and (4) a pH adjustor to maintain solution pH within a desired range.

Electroplating solutions are used to plate a variety of metal and bear some resemblance to electroless plating solutions. However, they typically do not require reducing agents for plating and many do not require complexing agents.

The major ingredients of plating solutions are well known. Representative electroless nickel and copper plating solutions are disclosed in U.S. Patent Nos. 3,329,512;

3,383,224; 3,650,777; 3,674,516; 3,915,715; and 4,036,651, all of which disclose the compositions of known plating solutions. The contents of these patents are incorporated herein by reference. Representative electrolytic metal plating solutions are disclosed in the Metal Finishing Guidebook and Directory, Metals and Plastics Publications, Inc., Hackensack, N.J. 1976, pp. 177 to 338. The contents of this portion of the handbook are also incorporated herein by reference.

It is known in the art that when metal plating solutions are used, the content of various components of the solution are consumed. For example, as plating proceeds, the concentration of both the metal in solution and the reducing agent are reduced. It is also known that metal plating solutions can be replenished by addition or replenishment of consumed ingredients to prolong the useful life of the solution. Thus, it is conventional to add a replenisher formulation consisting primarily of the metal salt and reducing agent. Though the useful life of a plating solution may be prolonged by replenishment, eventually the solution becomes unsatisfactory and disposal is necessary. In addition, growth of metal plating solutions as a consequence of replenishment also requires disposal of excess solution. Further, rinse waters for plated parts build up metal values and these rinse waters also must be treated. Frequently, for disposal, the metal plating solution, the growth resulting from replenishment and the rinse waters are combined for both waste treatment and disposal. Consequently, for purposes of definition, the term plating solution is defined broadly to include solution containing dissolved metals and active complexing agent whether derived from the plating solution, rinse waters or growth or any combination of solutions resulting from a plating line.

The composition of several typical metal plating solutions, at initial make-up and when spent, are set forth below for purposes of illustration. The concentrations of the compo-

.3

nents of the spent solution are given as a range because they can vary within very broad limits dependent upon the source of the solution as discussed above. Hence, the ranges given should be viewed as illustrative only and should not be interpreted as limitations to the scope of the invention.

Example 1* (electroless copper solution)

| Ingredient | Initial | Spent |
| --- | --- | --- |
| Copper sulfate pentahydrate (gm) | 10 | 2 - 10 |
| Paraformaldehyde (gm) | 9.3 | 2 - 10 |
| Sodium Hydroxide (gm) | 25 | 5 - 25 |
| Pentahydroxypropyl diethylene triamine (gm) | 20 | 4 - 20 |
| Water | | To one liter |

* Example 1, US Patent No. 3,383,224

Example 2* (Electroless nickel solution)

| Ingredient | Initial | Spent |
| --- | --- | --- |
| Nickel sulfate (gm) | 20 | 2 - 20 |
| Sodium Hypophosphite (gm) | 30 | 3 - 30 |
| Hydroxy acetic acid (ml) | 33 | 3 - 30 |
| Water | | To one liter |

* Example 44, US Patent No. 3,977,884

Example 3* (Electrolytic palladium solution - alkaline)

| Ingredient | Initial | Spent |
| --- | --- | --- |
| Palladium (as diamino nitrite dissolved in dilute ammonia) (gm) | 15 | 3 - 15 |
| Ammonium nitrate (oz) | 12 | 2 - 12 |
| Sodium nitrite (oz) | 1.5 | 0.3-1.5 |
| Ammonium hydroxide to pH | 9 | 7 - 10 |
| Water | | To one gallon |

*Page 286, Metal Finishing Guidebook, supra

From the above formulations, it can be seen that the spent solutions may contain substantial quantities of metal and complexing agents, even though ready for disposal. These materials present a problem because discharging dissolved metals directly into effluent streams, other than in minute quantities, is prohibited by state and federal regulations.

In addition, even after the dissolved metal content of
spent solutions has been reduced to acceptable levels,
the complexing agent in the spent solution is often intact. Hence, the complexing agent in the solution is able
to complex with any of a variety of metals that it comes
into contact with as it is pumped to the point of discharge. The result is that even following treatment to
remove dissolved metals, it may be desirable to treat
the solution to inactivate or destroy the complexing agent before discharge to prevent the metal content of the
solution from becoming prohibitively high as a consequence of the active complexing agent dissolving metal residues.

A process for waste treatment of a plating solution containing dissolved metals and complexing agents is described in US Patent Application Serial No. 040,954 filed
May 21, 1979, incorporated herein by reference. The preferred method in that application is to remove the metal
content by contact of the plating solution with a dispersant of high surface area that has been treated with a
catalytic material preferably followed by hypochlorina-
tion of the complexing agent to render the same inactive.
The preferred method for removing dissolved metal values
from solution as set forth in that application comprises
contact of the spent solution with a material referred to
therein as a "seeder". A seeder is prepared by soaking a
particulate, porous material of high surface area, e.g.,
a filter aid material (inclusive of granulated carbon),
in a solution of a material catalytic to the deposition
of the dissolved metal, preferably a colloidal catalyst.
Palladium is the preferred catalytic material but other
precious metals such as gold, silver and other noble metals may be used as well as other metals known to be
catalytic to electroless metal deposition. A spent solution of CATALYST 6F, an aqueous, highly acidic colloid of palladium and stannous tin sufficient to reduce and maintain the palladium in colloidal form, is described therein as suitable material in which to soak the particulate material. The catalytic material is absorbed into the pores of the particulate material making the particulate material catalytic to the deposition of the electroless metal in the plating solution. Variables such as contact time of the particulate material with the catalyst solution is dependent upon the concentration of the catalytic material in solution and the porosity and surface area of the particulate material. Typically, the particulate material should be in contact with the catalytic material for at least five minutes, and preferably, in excess of ten minutes.

For more reproducible results, a fresh solution of palladium catalyst such as CATALYST 6F is stated to be preferred, preferably diluted to less than twenty percent strength of its normal strength and more preferably diluted to less than 100 parts palladium per million parts of solution. The dilution is stated therein to be desirable to avoid triggering of the solution when adding seeder to the solution to be treated. "Triggering" a solution is a term used in the art to refer to a solution undergoing uncontrolled spontaneous decomposition. One consequence of triggering is that the metal fines can be formed which are difficult to separate from solution . Another consequence is that on occasion, the metal values precipitate onto the walls of the reactor containing the spent solution and are difficult to remove.

The above application avoids the problem of triggering by solution agitation to avoid localized areas of high seeder concentration and diluting the solution of palladium catalyst to much less than its normal strength to prevent over catalization of the spent solution. The contact time of the seeder with the spent solution was stated to be about 10 minutes to in excess of three hours after which a means of separating the seeder from the solution was required. Filtration such as by a bag filter was suggested. The preferred method, especially for use in a continuous process, used a series of overflow separation tanks which combined the steps of contact with seeder and physical separation into a single step. A suggested alternative was to stop agitation permitting the seeder to settle, followed by decantation.

Each of these possibilities has disadvantages in that filtration must take place and the possibility of triggering is always present. Furthermore, either the line must be shut down for a period of time or separate tanks must be dedicated to the destruction of spent material. In addition, when reusing seeder which has been previously employed, care must be used to ensure that the separation process used has not destroyed the ability of the seeder to plate out metal values and that the used seeder still has sufficient capacity to reduce the metal values in the spent solution to acceptable values. Care also must be exercised in the storage and transportation of new seeder that its plating ability is not lost as might occur upon its contact with oxidizing agents such as air.

Summary of the Invention

In accordance with the subject invention, a process is provided for the waste treatment of a solution containing dissolved metals comprising removal of the metal content by filtering the solution through a bed of seeder, and removing the clear effluent from the bottom of the bed. By this method, the channeling which limits the amount of metal removed when solution is fed from the bottom and removed from the top, is eliminated. Moreover, no mixer is required as in the prior art.

In the preferred method, in accordance with the present invention, a pre-plumbed module filled with seeder and a pH adjustor solution to allow for shipping of the module, is connected to the growth tank of a plating line and excess solution is fed to the module by either gravity or a pump. When the module is saturated, it is replaced by a fresh module. The saturated module is sent to a recycling facility for recovery of the metal and recharging of the module, or simply disposed of.

## Brief Description of the Drawings

Fig. 1 is a schematic diagram of the process of the present invention including an optional bath preceding the module for preparing other than plating solutions for removal of metal values, and an optional chelate destruct tank following the module.

Fig. 2 is an illustration of a module for removal of metal values in accordance with the process of the present invention.

Fig. 3 is an illustration of a module for removal of metal values in accordance with the invention, shown as the module would typically be shipped.

Fig. 4 is a cut-away view of the module of Fig. 3 illustrating typical connections for use in the process of the present invention.

## Description of the Preferred Embodiment

From the formulation set forth above for typical plating solutions (Examples 1 to 3), it can be seen that the plating solution to be waste treated may contain substantial quantities of dissolved metals. In general, as discussed above, the dissolved metal content can vary within very wide limits dependent upon the source of the specific solution treated. For example, rinse waters are frequently mixed with a spent plating solution prior to waste treatment. Solutions so mixed are within the scope of this invention. Solutions mixed with rinse waters would have a lower content of dissolved metal and complexing agent than solutions composed of excess growth or solution no longer usable because their plating properties have become unpredictable. For purposes of illustration only, the metal content of a conventional spent solution to be treated in accordance with this invention may vary between 0.1 and 50 grams per liter and more typically, between 2 and 25 grams per liter.

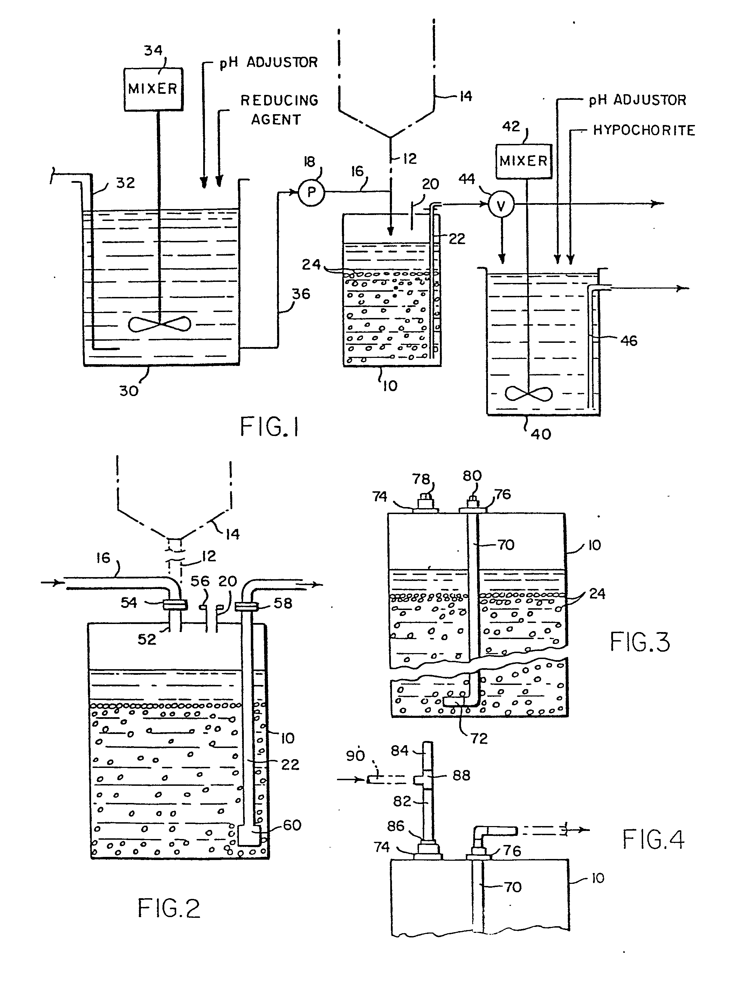

Fig. 1 is a schematic diagram of the process of the present invention. In the center of the schematic is module 10 which removes the metal values from solution. Solution to be treated is fed into module 10 by gravity feed 12 from tank 14 or is pumped through pipe 16 by pump 18. Since the plate-out which occurs in module 10 results in the production of hydrogen gas, module 10 is also provided with vent 20 to allow the produced gas to escape. Module 10 is also provided with a standpipe which extends to as near the bottom of module 10 as possible to ensure that the solution travels through the entire bed of seeder 24 before exiting through standpipe 22 to further treatment or a sewer.

The preferred seeder for use in the present invention is that in U.S. Patent Application Serial No. 040,954, incorporated herein by reference above. The preferred embodiment for use in the present application is the embodiment described in that application for use when the seeder product is not to be used immediately. In that situation, the seeder which has been catalyzed by a palladium catalyst is further coated over at least a portion of its surface with a very thin layer of metal such as nickel or copper. The seeder desirably has at least fifty percent of its surface coated with metal, most preferably over 90 percent of its surface so coated. It should be noted that the metal selected for coating the seeder should be autocatalytic to the dissolved metal in the solution. Therefore, a nickel coating would probably not be useful for waste treating a copper plating solution. Instead, the coating metal for such an application is desirably copper.

Most filter aids are suitable particulate materials for the preparation of seeder. Diatomaceous earth is the most commonly used filter aid. Other filter aids comprise activated carbons, talc, alumina, oxides of the transition metals, various clays, etc., all of which are well known in the art. Granular materials as opposed to fine particulates are preferred to avoid packing of the seeder within the module and thereby insure that sufficient contact is made between seeder and solution. In this respect, it is preferred that the bulk of the filter aid is retained by a 200 mesh Tyler sieve and more preferably, by a 100 mesh Tyler sieve.

For the specific contemplated use of this invention, granular carbon treated with a palladium catalyst and coated over at least about 80 percent of its surface with a thin layer of copper constitutes a preferred seeder. The carbon is of extremely high surface area and of a specific gravity such that it does not become suspended when solution is placed in contact with it. Also, the metal removed from solution is easily recovered by burning the carbon off as carbon dioxide leaving pure metal behind for recovery.

For the seeder to remove sufficient dissolved metal to meet regulations relating to discharge to the environment, the spent solution must function as an electroless plating solution. Therefore, it is frequently necessary to add reducing agent and pH adjustor to the spent solution. In addition, the spent solution cannot contain ingredients antagonistic to the plating solution such as cyanides or other materials which in sufficient quantity, will poison the plating solution.

To facilitate the adjustment of spent solution to function as an electroless plating solution, module 10 is optionally preceded by preparation tank 30 which is equipped with heater 32 to ensure that the solution is heated to the appropriate temperature for plating and mixer 34 to ensure that pH adjustor and reducing agent added to the solution are uniformly mixed.

Preferably, the reducing agent is added in stoichiometric excess of the dissolved metal contained in solution and more preferably, is always in excess of 2 grams per liter of solution. Also, the seeder is used under conditions normally used for plating solution from which the spent solution is derived. For example, a solution that is normally heated should be heated for plate-out onto seeder. If the metal to be removed is copper from an alkaline copper plating solution, formaldehyde is conveniently used as the reducing agent and the solution is preferably adjusted to pH above 12 by addition of sodium hydroxide.

In addition to spent plating solution, tank 30 could also be used to prepare rinses, chelated alkaline cleaners and alkaline etch rinses for subsequent metal removal by module 10.

After preparation, the solution would then be pumped from tank 30 through pipe 36 by pump 18 and through pipe 16 into module 10 for treatment.

Depending on the concentration of complexing agent in solution leaving module 10 by standpipe 22, it may be desirable to further treat the solution in chelate destruct tank 40. Tank 40 is equipped with mixer 42 to ensure complete mixing of its contents. The preferred method of accomplishing destruction or inactivation of the complexing agent is described in U.S. Patent Application Serial No. 040,954, incorporated herein by reference above. The preferred method described therein comprises contact with a halogen. The preferred halogen for inactivating the complexing agent is chlorine and the most expeditious method of adding the chlorine is in the form of an alkali or an alkaline earth metal hypochlorite, most preferably in the form of an aqueous solution of sodium hypochlorite.

The first step in inactivation of the complexing agent is dilution. The reaction is exothermic and more readily controlled when the concentration of the complexing agent is reduced. Therefore, the solution is diluted so that the concentration of the complexing agent in solution is reduced to preferably less than fifty percent of what it would be in a freshly made up plating solution. Preferably, the concentration of the complexing agent varies between about 0.1 and 20 grams per liter and more preferably, between about 0.5 and 10 grams per liter of plating solution.

Following dilution, pH adjustment may be necessary. The inactivation of the complexing agent is not particularly pH dependent and can be accomplished over a wide range of pH. In this respect, pH can vary between about 2.0 and 12.5. However, it is known that an explosive gas mixture can be formed by acid contact of ammonia with a hypochlorite. Moreover, regulations require discharge of waste solution within a pH range of from 6.5 to 9.0. Accordingly, a preferred pH range is from 7 to 10, and the most preferred range is between about 9 and 10, it being understood that the pH drifts lower as the reaction proceeds.

The concentration of the halogen used is that amount necessary to inactivate substantially all of the complexing agent. Preferably, the concentration of the halogen is in molar excess of the concentration of the complexing agent, preferably, from 1 to 25 moles of halogen are used per mole of complexing agent and more preferably, from about 5 to 20 moles per mole of complexing agent.

Contact time of the halogen with the spent solution is that time necessary to inactivate the complexing agent. The reaction is not instantaneous and generally, in excess of 10 minutes contact time is required. Preferably, the contact time is at least 1 hour and frequently, from 2 to 4 hours are required, though the reaction is temperature dependent and elevated temperatures reduce the contact time.

Other conditions governing the inactivation step are not critical. The temperature is preferably room temperature but this is not mandatory and if the solution temperature is above room temperature as a consequence of an exotherm, this does not deleteriously affect the reaction. Preferably, agitation is used during contact of the halogen with the spent solution.

Following inactivation of the complexing agent in the spent solution, the pH of the solution may require adjustment to an acceptable level for discharge to the environment. Current regulations permit discharge within a pH range of from 6.5 to 9.5. Therefore, if the inactivation step is performed within the preferred range of pH, the solution may be discharged through pipe 46 without further pH adjustment.

Fig. 2 is an illustration of a module for removal of metal values in accordance with the process of the present invention. Module 10 is designed to be an integral unit readily attached and unattached from feeding and exit piping and readily shipped. For example, module 10 can comprise an integral container having a volume of approximately 5 gallons. If recycling is expected, module 10 can optionally be equipped with a resealable cover. Module 10 and the pipe used therewith are preferably made of material inert to the solution to be treated, a preferred material being polyethylene. Pipes 52, 20 and 22 are then attached to the top of module 10 with each of the pipes having means for attachment 54, 56 and 58, at its external end to allow each pipe to be capped for shipping and then be opened and appropriately connected for use in the process of the present invention.

Module 10 is preferably filled to about two-thirds of its volume with seeder 24. Seeder 24 can be introduced through pipe 52, or if desired, a separate larger opening can be provided for introducing seeder 24. It should be noted that standpipe 22 must be in place prior to the addition of seeder 24 to insure its proper placement as close to the bottom of module 10 as possible. At its bottom end, standpipe 22 is provided with a filter 60 which allows treated solution to pass through but prevents the exit of seeder 24.

For shipping and storage purposes, module 10 is closed by capping pipes 52,20 and 22 at attachment means 54, 56 and 58. Furthermore, to prevent the metal coating on seeder 24 from oxidizing, module 10 is filled to at least slightly above the level of the seeder with a solution having a pH between about 7 and about 9. Preferably even more solution is employed to ensure that seeder 24 remains immersed even if module 10 is tipped for periods of time during shipping or storage. This solution prevents oxidation, and in addition, allows module 10 to be used for treatment immediately upon receipt without further preparation although it is preferred that the pH be adjusted and reducing agent be added prior to use for treatment. A preferred solution for shipping and storage is one of sodium hydroxide of sufficient strength to provide the appropriate pH.

A typical pH for plating is about 12. Unless the pH is adjusted to greater than about 12 and reducing agent is added, the metal values from the solution may not begin plating-out on the seeder until the solution used for shipping or storage has been flushed from the module. If desired, this initial solution can simply be mixed with other solutions to be treated. However, since this is somewhat inconvenient, it is preferred that the pH be adjusted to about 12 and reducing agent be added to the module prior to initiating treatment. The user would then be assured that plating would begin immediately. For example, where thirty pounds of seeder is contained within a module with a volume of approximately five gallons, the module would be prepared by adding about 5 ml of 50 % sodium hydroxide solution per gallon and about 9.5 ml of 37 % formalin per gallon. It should be noted that excesses of the pH adjustor and reducing agent are not detrimental to the plating-out process but may necessitate further treatment before discharge to the sewer if excessive amounts are used. After addition of the pH adjustor and reducing agent, the module would be capped and rolled over a few times to insure adequate mixing before being used to treat spent solution. The addition of the pH adjustor and reducing agent insures that the conditions within the module simulate those of a typical plating bath and thus treatment begins as soon as spent solution is fed into the module.

In operation, the flow rate through module 10 is adjusted to insure that the concentration of metal is reduced to at most a few parts per million during passage through the seeder bed. In practice, metal value concentration as low as 0.3 to 0.5 ppm has been obtained.

In the case where module 10 is about 5 gallons capacity, module 10 is filled about two-thirds full by 30 pounds of seeder. In operation, this provides a stagnant pool of liquid at the top of module 10 to hinder the disturbance of the seeder bed. When using this size container, pipes 52, 20 and 22 are preferably about one-half inch in diameter allowing treatment of about 15 gallons per hour or about one liter per minute. If desired, the module can be scaled up accordingly, or in the alternative, the smaller module can be connected in series.

Fig. 3 illustrates a typical module as it would appear during shipping or storage. Module 10 is fitted with standpipe 70 which opens at a right angle to the length of standpipe 10 to allow standpipe 10 to be placed as close to the bottom of module 10 as possible. Filter 72 is attached to the opening at the bottom of standpipe 70 to prevent seeder 24 from entering standpipe 70 and being expelled. During shipping and storage, inlet 74 and outlet 76 would be closed using plugs 78 and 80.

Fig. 4 illustrates typical connections for using the module of Fig. 3 for treatment of spent solutions. The first step is removing plugs 78 and 80. Depending on the type of solution being treated, it may be desirable to have pipe 82 and vent pipe 84 be larger than the remaining piping in the system to allow generated gas to vent by means of vent pipe 84. To accommodate such larger pipe, the inlet assembly is preferably provided with bushing 86 which can be removed to accommodate a larger pipe. Tee 88 allows spent solution to be pumped into module 10 by pipes 90 and 82 while any gas escapes by vent pipe 84. By using this arrangement, the user of the module only has two connections which must be disconnected and then reconnected each time a spent module is replaced. When gravity feed is used rather than a pump, pipe 90 would not be present, and vent pipe 84 would be replaced by a pipe leading to a reservoir or funnel. When gravity feed is used, a vent is not typically needed since any gas can escape through the reservoir or funnel. When using a gravity feed and a module of about five gallons capacity containing thirty pounds of seeder, a two foot minimum head is preferred to give a flow rate of about 15 gallons per hour or one liter per minute.

The seeder in Example 4 below has been found able to recover over twice its weight of copper metal and thus a large volume of spent solution can be treated before a module is saturated and must be replaced by a fresh module. This is in contrast to modules which are fed from the bottom. In such modules, channeling tends to occur after a period of time which reduces the amount of contact between solution and seeder. With such bottom fed modules, recovery is typically less than half that seen when utilizing the module of the present invention.

The following examples will better illustrate the process of this invention.

Example 4

This example illustrates the preparation of seeder that will be used for treatment of spent solution in subsequent examples, and is the same as Example 4 in U.S. Patent Application Serial No. 040,954 incorporated by reference above.

The seeder substrate used in this example is an acid washed particulate, granular carbon sold under the tradename Calgon Filtrasorb 400.

The first step in the preparation of seeder is to wash 357 grams of the carbon with water to remove dust. The washed carbon is mixed with a palladium catalyst sold under the tradename CATALYST 9F which catalyst has been diluted with hydrochloric acid and an acidic solution of stannous tin to about 0.02 percent of its packaged strength so that its palladium content is about 0.0004 grams per liter. The carbon is held in the catalyst solution with agitation for about 10 minutes after which time it is removed by filtration. The carbon is then rinsed with water and then mixed with a five percent solution of sodium hydroxide for about 10 minutes. Thereafter, following several water rinses, the catalyzed carbon is mixed with agitation with an electroless copper plating solution sold under the tradename CP-74 which solution is used at about double its normal strength so that the copper content, as metal, is about 7 grams per liter. The catalyzed carbon is kept suspended in solution by mild agitation for about 15 minutes, rinsed and then removed from about 2/3 of the liquid by filtration. This treatment produces a thin coating of copper over the catalyzed carbon. The carbon is now ready for treatment of spent solution.

In place of the copper coating over the catalyzed carbon as set forth above, any of a variety of metals could be used, one illustrative example being an electroless nickel such as that nickel solution sold under the tradename NIPOSIT 65, it being understoood that when nickel is used to plate the seeder, the seeder would probably not be suitable for treatment of a spent copper solution, but would be useful for treatment of a spent nickel solution.

Example 5

This example represents treatment procedure for a spent copper plating solution. The solution treated is a used solution sold under the tradename CP-78. The formulation of the used solution, prior to treatment, is as follows:

| | |
|---|---|
| Copper (as cupric sulfate pentahydrate) | 7 grams/liter |
| Pentahydroxypropyl diethylene triamine | 14 grams/liter |
| Formaldehyde (Free) | 2.5 grams/liter |
| Sodium Hydroxide | 5.8 grams/liter |
| Water | to one liter |

The solution also contains minor quantities of other proprietary additives, but these are not believed to be relevant to the process disclosed herein because they are present in minute quantities and they are not involved in the waste treatment procedure described herein.

The above formulation requires both pH adjustment and addition of reducing agent because the concentration of each ingredient is insufficient for the formulation to adequately function as a plating solution. Accordingly, 1 gram of formaldehyde and 2 grams of sodium hydroxide are mixed into the above formulation. The temperature of the solution is increased slightly to about 90°F as this is the recommended temperature for use of a CP-78 plating solution.

A module as described above is prepared by adding 30 pounds of the seeder of Example 4 to a five gallon polyethylene container which is fitted with a feed pipe, a vent and a standpipe, all of one half inch diameter. The solution is pumped into the module at a rate of about one liter per minute and the treated solution leaving by means of the standpipe has a copper content of less than one part per million parts of solution and within acceptable regulation limits, and typically 0.3 to 0.5 ppm.

Example 6

The procedure of Example 5 can be repeated for an electroless nickel plating solution having a formulation as follows:

| | |
|---|---|
| Nickel sulfate hexahydrate | 12 grams |
| Sodium hypophosphite monohydrate | 15 grams |
| Hydroxyacetic acid | 24 grams |
| Ammonium hydroxide | to pH 4.5 |
| Water | to one liter |

In order to produce an active plating solution, the pH would be maintained at about 9 or above and it may be necessary to add additional hypophosphite to produce an active plating solution before treatment begins. The seeder used should preferably be nickel coated. A module comparable to that described in Example 5 would be used and the temperature of the solution to be treated would preferably be adjusted to about 50 °C $\pm$ 5 °C.

Claims:

1. A module for use in a process for removing dissolved metal from a solution containing dissolved metals, said module comprising a container having within it a seeder catalytic to the deposition of the dissolved metal, said seeder comprising a particulate material of large surface area having a colloidal noble metal absorbed on its surface and having a thin layer of a metal over at least 50% of its surface, and solution sufficient to submerge said seeder, said solution being of a pH sufficient to maintain said seeder catalytic, said container having a feed pipe and a standpipe, said standpipe extending downward to substantially the bottom of said container, said feed pipe and said standpipe being adapted to be closed or attached to inlet and outlet pipes.

2. The module of claim 1 where the noble metal on the seeder is palladium.

3. The module of claim 1 where the layer of metal on the seeder covers at least 90% of its surface.

4. The module of claim 1 where the particulate material of the seeder is filter aid.

5. The module of claim 1 where the particulate material of the seeder is carbon.

6. The module of claim 1 where the layer of metal on the seeder is copper.

7. The module of claim 1 where the layer of metal on the seeder is nickel.

8. The module of claim 5 where the carbon of the seeder is retained on a 200 mesh Tyler sieve.

9. The module of claim 5 where the carbon of the seeder is retained on a 100 mesh Tyler sieve.

10. The module of claim 1 where the module is at least 65% full of seeder.

11. The module of claim 1 where solution containing dissolved metals must travel through at least nine inches of seeder before exiting through the standpipe.

12. The module of claim 1, further including a vent pipe.

13. The module of claim 1 where the pH of the solution is above 7.

14. The module of claim 1 where the solution which submerges the seeder is a solution of sodium hydroxide.

15. The module of claim 1 where the standpipe has a filter at its lower end.

16. A process for the waste treatment of a spent plating solution containing dissolved metal, said process comprising the steps of adjusting the pH of the solution and the concentration of a reducing agent in the solution whereby the spent plating solution is capable of plating over a catalytic surface, introducing the spent plating solution into a module comprising a container having within a seeder catalytic to the deposition of the dissolved metal, said seeder comprising a particulate material of large surface area having a colloidal noble metal absorbed on its surface and having a thin layer of a metal over at least 50% of its surface, said container having a feed pipe and a standpipe, said standpipe extending downward to substantially the bottom of said container, said spent solution being fed into said module by said feed pipe, allowed to pass through said seeder, and removed from the module by said standpipe.

17. The process of claim 16 where the spent plating solution also contains a complexing agent, and including the step of inactivating the complexing agent in said solution subsequent to the step of depositing dissolved metal within the module.

18. The process of claim 16 where the dissolved metal is selected from the group of copper and nickel.

19. The process of claim 16 where the pH of the solution is adjusted to between 8 and 12 prior to introducing the solution into the module.

20. The process of claim 16 where the particulate material is a filter aid having a colloidal palladium absorbed on its surface.

21. The process of claim 20 where the particulate material is granulated carbon having colloidal palladium absorbed on its surface.

22. The process of claim 16 where the metal coating is copper and the metal dissolved in solution is copper.

23. The process of claim 16 where the metal coating is nickel and the metal dissolved in solution is nickel.

FIG.1

FIG.2

FIG.3

FIG.4

## European Patent Office — EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| D,P, X | US - A - 4 260 493 (G.A. KRETAS et al.) (07-04-1981) <br> * Totality; especially claims and columns 2,5,6 * <br> ---- | 1,2,4-9,16,17,19-23 | C 23 C 3/00 <br> B 01 D 37/02 <br> B 01 J 19/00 <br> C 02 F 1/62 |

**TECHNICAL FIELDS SEARCHED (Int.Cl. 3)**

C 23 C
B 01 D
B 01 J
C 02 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons
&: member of the same patent family, corresponding document

| X | The present search report has been drawn up for all claims | | |
|---|---|---|---|
| Place of search | Date of completion of the search | | Examiner |
| VIENNA | 05-05-1982 | | SLAMA |

EPO Form 1503.1 06.78